# EUROPEAN PATENT SPECIFICATION

(11) **EP 2 996 788 B1**
(45) Date of publication and mention of the grant of the patent: **07.12.2016**
(21) Application number: 14731771.3
(22) Date of filing: 14.05.2014
(51) Int. Cl.: B01D 35/30, B01D 27/08

(54) **OIL FILTER CONSTRUCTION FOR INTERNAL COMBUSTION ENGINES AND FOR MACHINES INCLUDING OLEODYNAMIC CIRCUITS**
ÖLFILTER FÜR EINE BRENNKRAFTMASCHINE UND FÜR MACHINEN MIT ÖLKREISLAUF
FILTRE À HUILE POUR UN MOTEUR À COMBUSTION INTERNE ET POUR ENGINES AYANT UN CIRCUIT OLEODINAMIQUE

(30) Priority: 15.05.2013 IT MI20130193
(43) Date of publication of application: 23.03.2016
(73) Proprietor: Fai Filtri S.r.l., 24040 Pontirolo Nuovo (BG) (IT)
(72) Inventor: BOLDINI, Erminio Donald, I-20010 Boffalora sopra Ticino (MI) (IT)
(74) Representative: Saporiti, Emilio Luigi
(86) International application number: PCT/IB2014/000724
(87) International publication number: WO 2014/184637

(56) References cited:
- EP-A1- 0 830 885
- EP-A1- 2 108 424
- GB-A- 982 548
- JP-A- H09 173 717

## Description

### BACKGROUND OF THE INVENTION

The present invention relates to an oil filter construction, for internal combustion engines and in general for machines operating based on an oil flow.

As is known, an oil filter is conventionally used in internal combustion engines and in many machines operating for collecting metal wastes and impurities of various nature conveyed through the oil flow in a regular operation of those devices.

The present oil filter construction is designed for being screwed on and off and is so designed as to allow a replacement of its filtering element only, without the need of also replacing the oil filter housing.

A prior oil filter comprises a metal filter body which may be directly threaded on the engine basement or on a hydraulic machine and containing a filtering element usually made of a paper material.

Such an oil filter is affected by the great drawback that it cannot be easily disposed of.

JP H09 173717 discloses a further type of oil filter, whereby a cartridge is coupled to a container body.

### SUMMARY OF THE INVENTION

Accordingly, the aim of the present invention is to provide such an oil filter construction for internal combustion engines and other machines, which may be easily disposed of.

Within the scope of the above aim, a main object of the invention is to provide such an oil filter construction which may be used in replacement of conventional metal filters threaded or screwed to an engine basement or block and other hydraulic machines.

Another object of the present invention is to provide such an oil filter construction which may be made of easily available elements and materials and which, moreover, is very competitive from a mere economic standpoint.

Yet another object of the present invention is to provide such an oil filter construction which, owing to its specifically designed structural features, is very reliable and safe in operation.

According to one aspect of the present invention, the above mentioned aim and objects, as well as yet other objects, which will become more apparent hereinafter, are achieved by an oil filter construction, for internal combustion engines and hydraulic machines, according to claim 1.

### BRIEF DESCRIPTION OF THE DRAWINGS

Further characteristics and advantages of the present invention will become more apparent hereinafter from the following disclosure of a preferred, though not exclusive, embodiment of the invention, which is illustrated, by way of an indicative but not limitative example, in the accompanying drawings, where:

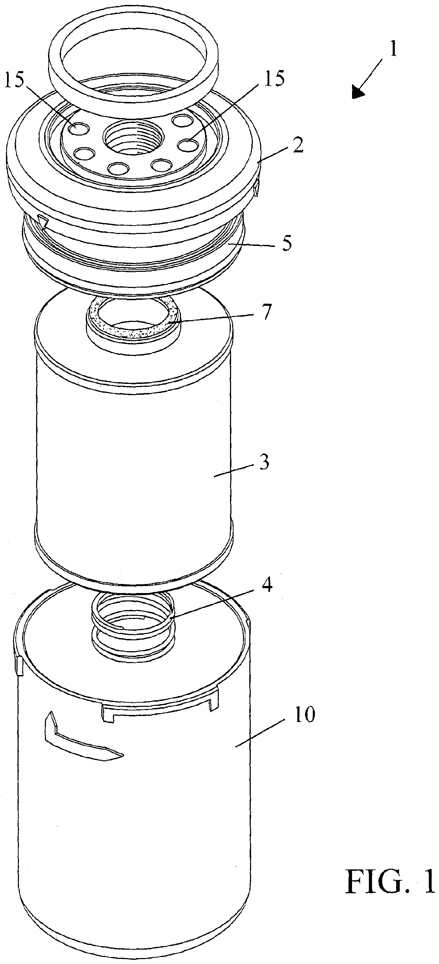

Figure 1 is an exploded perspective view showing the oil filter construction according to the present invention;

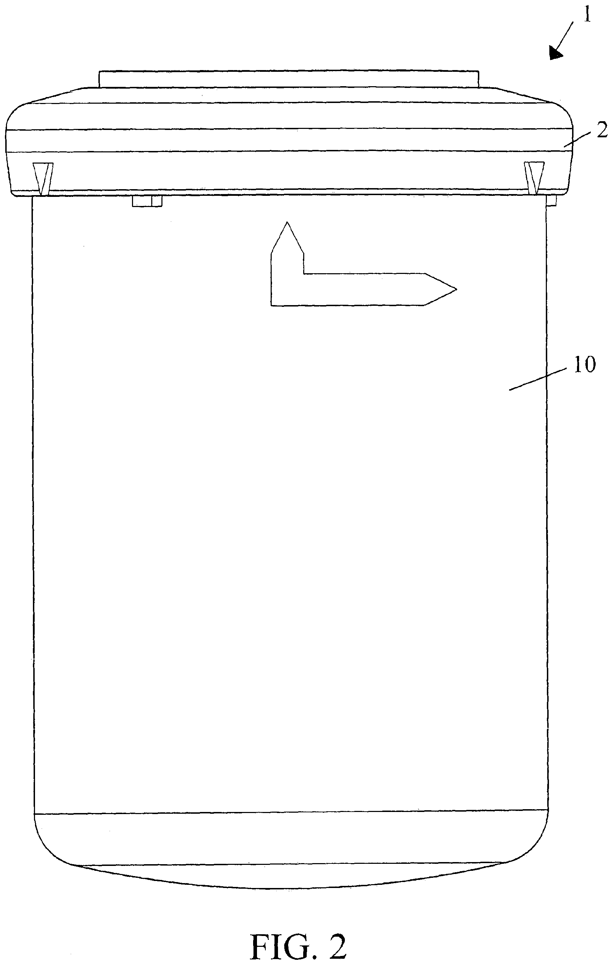

Figure 2 is an elevation view of the oil filter construction, in a use condition thereof;

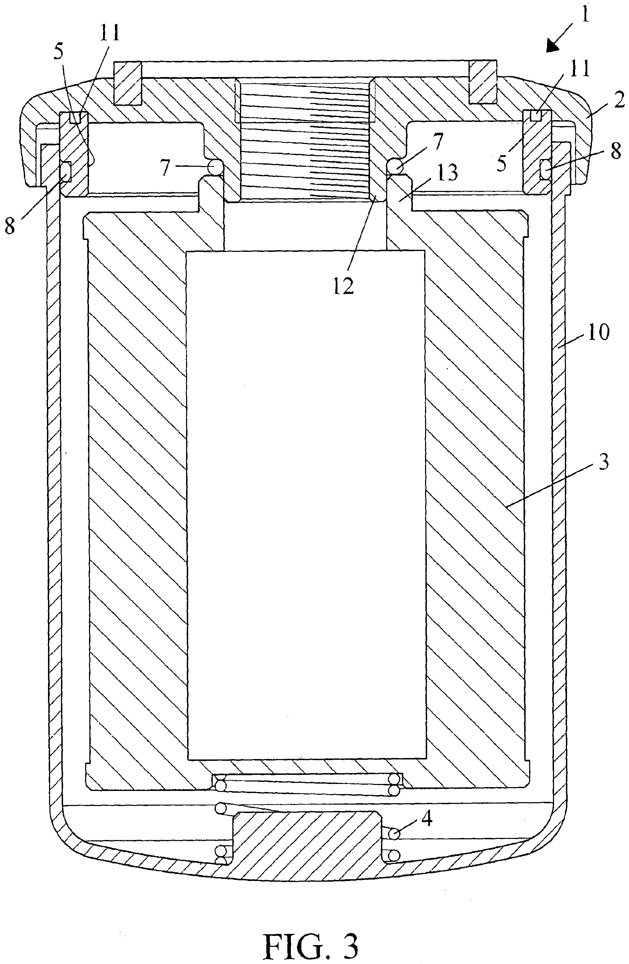

Figure 3 is a longitudinal cross-sectioned elevation view of the oil filter construction; and

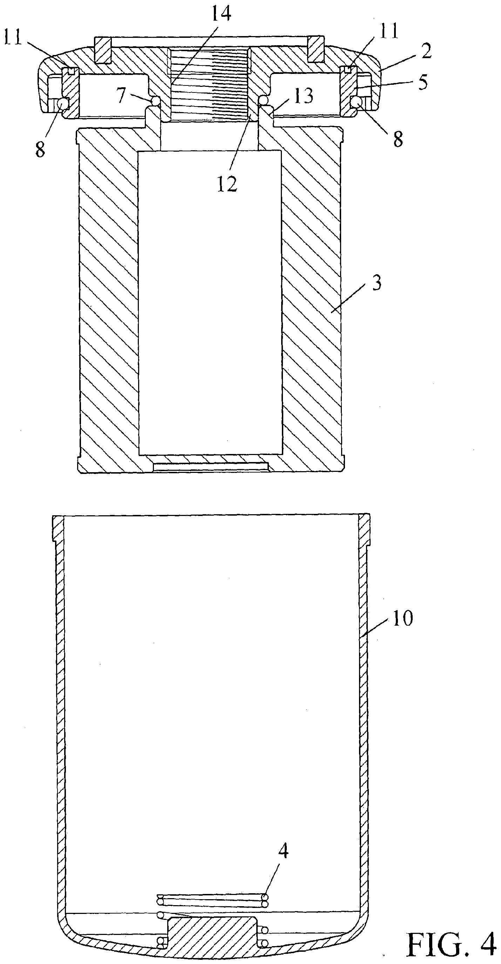

Figure 4 is another longitudinal cross-sectioned elevation view showing the filter construction with the filter body being removed from the flange.

### DESCRIPTION OF THE PREFERRED EMBODIMENTS

With reference to the number references of the above mentioned figures, the oil filter construction according to the present invention, which has been generally indicated by the reference number 1, comprises a flange 2 to which a filter body 10 designed for containing a filtering cartridge 3 may be coupled.

The filter body 10 is coupled to said flange 2 by quick coupling means comprising a bayonet type of female closure.

Between the flange 2 and the top or upper edge of the filter body 10, a centering ring 5 is arranged, said centering ring being fixed to said flange by an annular sealing rib 11 preferably made of a sealing epoxy material.

Said centering ring 5 comprises an annular recess housing an O-ring 8 providing a sealing connection with the surface of the upper edge of the body 10, which is arranged, in a use condition, between the centering ring 5 and flange 2.

Said flange 2 comprises an annular lug element 12 for engaging an end piece 13 of the filtering cartridge 3, through an interposition of an annular gasket 7 providing a sealed connection between said filtering cartridge 3 and flange 2.

In a use condition, that is with the body 10 being latched or coupled to said flange 2, a pressure spring 4, arranged between a bottom of the body 10 and said cartridge 3, urges said cartridge against said flange 2, thereby pressing the annular gasket 7.

As shown, the annular lug element 12 of said flange 2 comprises a threaded hole 14 which may be engaged by a threaded fitting provided in a conventional internal combustion engine for attachment of a standard type of oil filter.

More specifically, the threaded hole 14 allows the engine filter attachment or fitting, not shown in the figures, to communicate with the inner portion of the filtering cartridge 3.

Thus, filtered oil will pass between the inner portion of the filtering cartridge 3 and the outer portion thereof, inside the body 10.

The outer portion of the filtering cartridge 3 communicates with the engine basement or block or other hydraulic machine by suitable radially extending holes 15 formed in said flange 2, which comprises a sealing gasket 6, of a standard type, providing a sealed coupling of the oil filter construction with the engine basement or hydraulic machine it is applied to.

According to the invention, the oil filter construction may be mounted either in an internal combustion engine or a hydraulic machine in replacement of a conventional screw-on/off oil filter.

Thus, when the filtering cartridge must be replaced, it will be sufficient to disengage the body 10 from the flange 2 and remove the cartridge 3 which may be easily disposed of or, if desired, also washed and reused.

It has been found that the invention fully achieves the intended aim and objects.

In fact, the invention has provided an oil filter construction allowing to separately dispose of the filter body and filtering cartridge, the latter being contaminated by oil.

In practicing the invention, the used materials, as well as the contingent size and shapes can be any, according to the requirements.

## Claims

1. An oil filter construction, for an internal combustion engine or a machine operating based on an oil flow, said oil filter construction comprising a flange to which a container body adapted to contain a filtering cartridge is coupled, said container body being coupled to said flange by coupling means allowing to separate said body from said cartridge to dispose of said cartridge only, said coupling means being quick coupling means comprising a bayonet type or female closure, **characterized in that** between said flange and a top edge of said body a centering ring, fixed to said flange by an annular rib of a sealing material, preferably an epoxy sealing material, is arranged, that said centering ring comprises an annular recess in which an O-ring is engaged providing a sealing coupling with a surface of the top edge of said body which, in a use condition, is arranged between said centering ring and flange, that said flange comprises an annular lug element adapted to engage an end piece of said filtering cartridge through an interposition of an annular gasket providing a sealing coupling between said cartridge and flange, and that said cartridge comprises an outer cartridge portion communicating with said engine or machine through radially extending holes formed in said flange, said flange comprising a sealing gasket, of a standard type, providing a sealed connection of said filter construction with said engine or machine said filtering is applied to.

2. An oil filter construction, according to claim 1, **characterized in that**, in a use condition, that is with said body coupled to said flange, a pressing spring, arranged between a bottom of said body and said cartridge, urges said cartridge against said flange thereby pressing said annular gasket.

3. An oil filter construction, according to claim 1, **characterized in that** said flange annular lug element comprises a threaded hole which may be engaged by a threaded fitting of said internal combustion engine or machine for attachment of a standard type of oil filter, said threaded hole allowing said attachment to communicate with an inner portion of the filtering cartridge and an outer portion of said filtering cartridge, thereby filtered oil will pass between said inner and outer portions of said filtering cartridge.

## Patentansprüche

1. Ölfilterkonstruktion für einen Verbrennungsmotor oder eine Maschine, die auf einem Ölfluss basierend funktioniert, wobei die Ölfilterkonstruktion einen Flansch umfasst, mit dem ein Behälterkörper, der geeignet ist, um eine Filterkartusche zu enthalten, gekoppelt ist, wobei der Behälterkörper mit dem Flansch durch Kopplungsmittel gekoppelt ist, die es ermöglichen, den Körper von der Kartusche zu trennen, um nur über die Kartusche zu verfügen, wobei die Kopplungsmittel Schnellkopplungsmittel sind, die einen Bajonett- oder Innenverschluss umfassen, **dadurch gekennzeichnet, dass** zwischen dem Flansch und einem oberen Rand des Körpers ein Zentrierring, der an dem Flansch durch eine ringförmige Rippe aus Dichtungsmaterial, bevorzugt einem Epoxid-Dichtungsmaterial, befestigt ist, angeordnet ist, dass der Zentrierring eine ringförmige Vertiefung umfasst, in der ein O-Ring eingesetzt ist, der eine Verschlusskopplung mit einer Oberfläche des oberen Randes des Körpers bereitstellt, die in einem Gebrauchszustand zwischen dem Zentrierring und dem Flansch angeordnet ist, dass der Flansch ein ringförmiges Ösenelement umfasst, das geeignet ist, um ein Endstück der Filterkartusche durch ein Einschieben einer ringförmigen Dichtung, die eine Verschlusskopplung zwischen der Kartusche und dem Flansch bereitstellt, in Eingriff zu bringen, und dass die Kartusche einen äußeren Kartuschenabschnitt umfasst, der mit dem Motor oder der Maschine über sich radial erstreckende Löcher, die in dem Flansch gebildet sind, in Verbindung steht, wobei der Flansch eine standardmäßige Flanschdichtung umfasst, die eine dichte Verbindung der Filterkonstruktion mit dem Motor oder der Maschine bereitstellt, auf den bzw. die das Filtern angewendet wird.

2. Ölfilterkonstruktion nach Anspruch 1, **dadurch gekennzeichnet, dass** in einem Gebrauchszustand, d.h. wenn der Körper mit dem Flansch gekoppelt ist, eine Druckfeder, die zwischen dem Boden des Körpers und der Kartusche angeordnet ist, die Kartusche gegen den Flansch treibt, wodurch sie auf die ringförmige Dichtung drückt.

3. Ölfilterkonstruktion nach Anspruch 1, **dadurch gekennzeichnet, dass** das ringförmige Ösenelement des Flansches ein Gewindeloch umfasst, in das ein Gewindeformstück des Verbrennungsmotors oder der. Maschine in Eingriff gebracht werden, um einen standardmäßigen Ölfilter anzubringen, wobei es das Gewindeloch der Anbringung ermöglicht, mit einem Innenabschnitt der Filterkartusche und einem Außenabschnitt der Filterkartusche in Verbindung zu stehen, wodurch gefiltertes Öl zwischen den Innen- und Außenabschnitten der Filterkartusche hindurchgeht.

## Revendications

1. Structure de filtre à huile pour moteur à combustion interne ou actionnement de machine à partir d'un flux d'huile, ladite structure de filtre à huile comprenant une bride à laquelle un corps de contenant apte à contenir une cartouche de filtrage est couplé, ledit corps de contenant étant couplé à ladite bride par un moyen de couplage permettant de séparer ledit corps de ladite cartouche pour jeter seulement ladite cartouche, ledit moyen de couplage étant un moyen de couplage rapide comprenant une fermeture de type baïonnette ou femelle, **caractérisée en ce que**, entre ladite bride et un bord supérieur dudit corps, un anneau de centrage fixé à ladite bride par une nervure annulaire en matériau d'étanchéité, de préférence un matériau d'étanchéité en époxy, est disposé, que ledit anneau de centrage comprend un retrait annulaire dans lequel est engagé un joint torique assurant un couplage étanche avec une surface du bord supérieur dudit corps qui, en situation d'utilisation, est disposé entre ledit anneau de centrage et la bride, que ladite bride comprend un élément en saillie annulaire apte à s'engager dans une pièce terminale de ladite cartouche de filtration par l'interposition d'un joint annulaire assurant un couplage étanche entre lesdites cartouche et bride et que ladite cartouche comprend une partie extérieure de cartouche communiquant avec ledit moteur ou ladite machine par des trous s'étendant radialement pratiqués dans ladite bride, ladite bride comprenant un joint d'étanchéité de type standard assurant une connexion étanche de ladite structure de filtre avec ledit moteur ou ladite machine auquel ladite filtration est appliquée.

2. Structure de filtre à huile selon la revendication 1, **caractérisée en ce que**, en situation d'utilisation, c'est-à-dire avec ledit corps couplé à ladite bride, un ressort de compression disposé entre un fond dudit corps et ladite cartouche pousse ladite cartouche contre ladite bride en comprimant ainsi ledit joint annulaire.

3. Structure de filtre à huile selon la revendication 1, **caractérisée en ce que** ledit élément en saillie annulaire comprend un trou fileté dans lequel peut s'engager un raccord fileté dudit moteur à combustion interne ou de ladite machine pour la fixation d'un type standard de filtre à huile, ledit trou fileté permettant à ladite fixation de communiquer avec une partie intérieure de la cartouche de filtration et une partie extérieure de ladite cartouche de filtration, de l'huile filtrée passant ainsi entre lesdites parties intérieure et extérieure de ladite cartouche de fixation.
